# EUROPEAN PATENT SPECIFICATION

(11) **EP 1 679 347 B1**
(45) Date of publication and mention of the grant of the patent: **25.02.2009**
(21) Application number: 04792138.2
(22) Date of filing: 07.10.2004
(51) Int. Cl.: C08L 67/00, C08L 23/00

(54) **RESIN COMPOSITION, MOLDING THEREOF AND PROCESS FOR PRODUCING THE SAME**
HARZZUSAMMENSETZUNG, FORMKÖRPER DARAUS UND HERSTELLUNGSVERFAHREN DAFÜR
COMPOSITION A BASE DE RESINE, MOULAGE ET PROCEDE DE PRODUCTION

(30) Priority: 09.10.2003 JP 2003350869; 31.03.2004 JP 2004106595; 31.03.2004 JP 2004106596
(43) Date of publication of application: 12.07.2006
(73) Proprietor: UNITIKA LTD., Amagasaki-shi, Hyogo 660-0824 (JP)
(72) Inventor: UEDA, Kazuec/o Research & Dev. center UNITAKA LTD, Kyoto 611-0021 (JP); MATSUMOTO, Tatsuyac/o Research & Dev. Center, kyoto (JP); YANO, Takumac/o Research & dev. center UNITAKA LTD, Kyoto (JP); NAKAI, Makotoc/o Research & Dev. center of, Kyoto 611-0021 (JP); FURUKAWA, Tsuyoshic/o Research & Dev. Center, Kyoto (JP)
(74) Representative: Pautex Schneider, Nicole Véronique
(86) International application number: PCT/JP2004/014841
(87) International publication number: WO 2005/035656

(56) References cited:
- JP-A- 9 194 706
- JP-A- 9 194 706
- JP-A- 9 316 310
- JP-A- 9 316 310
- JP-A- 10 251 498
- JP-A- 10 251 498
- JP-A- 2001 261 797
- JP-A- 2001 348 498
- JP-A- 2002 322 355
- JP-A- 2002 346 594
- JP-A- 2002 346 594
- JP-A- 2003 147 182
- US-A- 4 632 869
- US-A1- 3 734 979
- US-A1- 2002 013 416

## Description

### TECHNICAL FIELD

The present invention relates to a resin composition comprising a biodegradable aliphatic polyester resin and a polyolefin resin excellent in heat resistance, impact resistance, durability, moldability and appearance, a product molded from the resin composition, and a preparation method for the resin composition.

### BACKGROUND ART

With recent growing awareness of environmental issues, a variety of biodegradable aliphatic polyester resins typified by polylactic acid have come into focus. The polylactic acid is advantageous in that a mass production technique for preparing the polylactic acid from a material derived from plants such as corn and sweet potato has been established and the polylactic acid has a higher melting point (Tm) than the other aliphatic polyester resins. However, the polylactic acid is hard and brittle and, hence, has insufficient impact strength. Further, the polylactic acid is susceptible to hydrolysis and, hence, has insufficient durability (hydrolysis resistance). The polylactic acid has a lower glass transition temperature (Tg), though having a relatively high melting point. Therefore, the polylactic acid is insufficient in heat resistance. In order to increase the heat resistance of the polylactic acid, the crystallinity of the polylactic acid should be sufficiently increased. In injection molding, for example, the crystallinity (i.e., heat resistance) of the polylactic acid of a molded product is controlled by controlling conditions such as a mold temperature and a molding cycle. In practice, however, the mold temperature should be set at a relatively high level for increasing the crystallinity, and the molding cycle should be correspondingly increased. This leads to a problem associated with the productivity or the production efficiency.

Biodegradable aliphatic polyester resins other than the polylactic acid such as polyethylene succinate, polybutylene succinate and polyglycolic acid are also insufficient in heat resistance, impact resistance and durability.

Where a composition comprising 100% of a biodegradable aliphatic polyester resin is used as a molding material, limitations are imposed on physical properties and a production process as described above. Therefore, it is difficult to use the biodegradable aliphatic polyester resin alone as the molding material. On the other hand, if a composition comprising a non-biodegradable resin and a biodegradable resin such as polylactic acid derived from plants is widely used, the use of petroleum-derived resins will be reduced. This supposedly contributes to the saving of oil resources and, hence, is eco-friendly.

In application fields requiring durable resins, the aforesaid trend is increased, and combinational use of a general-purpose resin such as a polyolefin resin and a polylactic acid resin, for example is under consideration. In JP-A-10-251498, it is proposed to provide a transparent resin composition having an improved impact strength by mixing an aliphatic polyester resin essentially containing polylactic acid with a syndiotactic polypropylene having a lower crystallinity.

### DISCLOSURE OF THE INVENTION

### Problems to be solved by the invention

The invention disclosed in JP-A-10-251498 is focused on the transparency of the resin composition. As a result, the resin composition has a reduced crystallinity, and is yet to be improved in physical properties such as heat resistance, durability and moldability.

To solve the aforesaid problems, the present invention provides a resin composition excellent in heat resistance, impact resistance, durability, moldability and appearance, a product molded from the resin composition, and a preparation method for the resin composition.

### MEANS FOR SOLVING THE PROBLEMS

As a result of intensive studies, the inventors of the present invention have found that the aforesaid problems can be solved by a resin composition comprising a biodegradable aliphatic polyester resin and a polyolefin resin in a predetermined ratio, and attained the present invention.

The present invention is characterized as follows.
(1) A resin composition comprises 10 to 99 mass% of a biodegradable aliphatic polyester resin (X) and 90 to 1 mass% of a polyolefin resin (Y).
(2) The resin composition of the item (1) has a total light transmittance of not higher than 60% as measured with respect to a 3-mm thick test piece in conformity with JIS K7105.
(3) In the resin composition of the item (1) or (2), the polyolefin resin (Y) forms a continuous phase.
(4) In the resin composition of any of the items (1) to (3), the biodegradable aliphatic polyester resin (X) has a blocked terminal.
(5) The resin composition of any of the items (1) to (4) further comprises 0.1 to 30 parts by mass of an epoxy-containing additive based on a total of 100 parts by mass of the biodegradable aliphatic polyester resin (X) and the polyolefin resin (Y).
(6) The resin composition of any of the items (1) to (5) further comprises 1 to 30 parts by mass of an inorganic filler based on a total of 100 parts by mass of the biodegradable aliphatic polyester resin (X) and the polyolefin resin (Y).
(7) The resin composition of any of the items (1) to (6) further comprises 0.05 to 30 parts by mass of a swellable layered silicate based on a total of 100 parts by mass of the biodegradable aliphatic polyester resin (X) and the polyolefin resin (Y).
(8) A product molded from the resin composition of any of the items (1) to (7).
(9) A method for preparing a resin composition comprising 10 to 99 mass% of a biodegradable aliphatic polyester resin (X) having a melt flow index (MI_{E}) as measured at 190°C with a load of 21.2N and 90 to 1 mass% of a polyolefin resin (Y) having a melt flow index (MI_{PO}) as measured at 190°C with a load of 21.2N comprises the step of melt-mixing the biodegradable aliphatic polyester resin (X) and the polyolefin resin (Y), wherein a ratio (MI_{E}/MI_{PO}) of the melt flow index (MI_{E}) to the melt flow index (MI_{PO}) is in a range of 0.1 to 10.

According to the preset invention, a resin composition excellent in heat resistance, impact resistance, durability, moldability and surface appearance is provided by employing a biodegradable aliphatic polyester resin. The inventive resin composition can be advantageously used for producing a variety of molded products in various applications. In the inventive preparation method, the inventive resin composition can be advantageously prepared.

### BRIEF DESCRIPTION OF THE DRAWINGS

Fig. 1 is a diagram illustrating a result obtained by observing a section of a sample of Example 1 of the present invention produced at a mold temperature of 15°C by a scanning electron microscope after immersing the sample in chloroform;
Fig. 2 is a diagram illustrating a result obtained by observing a section of a sample of Example 3 of the present invention produced at a mold temperature of 15°C by the scanning electron microscope after immersing the sample in chloroform;
Fig. 3 is a diagram illustrating a result obtained by observing a section of a sample of Example 4 of the present invention produced at a mold temperature of 15°C by the scanning electron microscope after immersing the sample in chloroform;
Fig. 4 is a diagram illustrating a result obtained by observing a section of a sample of Example 20 of the present invention produced at a mold temperature of 15°C by the scanning electron microscope after immersing the sample in chloroform; and
Fig. 5 is a diagram illustrating a result obtained by observing a section of a sample of Comparative Example 1 produced at a mold temperature of 15°C by the scanning electron microscope after immersing the sample in chloroform.

### DETAILED DESCRIPTION OF THE INVENTION

Examples of the biodegradable aliphatic polyester resin (X) in the present invention include aliphatic polyester resins each essentially comprising an α- and/or β-hydroxycarboxylic acid unit, and aliphatic polyester resins each comprising an aliphatic dicarboxylic acid component and an aliphatic diol component.

Examples of the α- and/or β-hydroxycarboxylic acid unit include D-lactic acid, L-lactic acid, a mixture of D-lactic acid and L-lactic acid, glycolic acid, 3-hydroxybutyric acid, 3-hydroxyvaleric acid and 3-hydroxycaproic acid, among which D-lactic acid, L-lactic acid and the mixture of D-lactic acid and L-lactic acid are particularly preferred.

Examples of the aliphatic dicarboxylic acid include succinic acid, adipic acid, suberic acid, sebacic acid and dodecanoic acid, and derivatives such as lower alkyl esters and anhydrides of these aliphatic dicarboxylic acids, among which succinic acid, succinic anhydride and adipic acid are preferred.

Examples of the aliphatic diol include ethylene glycol, 1,4-butanediol and 1,6-hexanediol, among which 1,4-butanediol is particularly preferred.

The polyester resin may be copolymerized with an aromatic dicarboxylic acid such as terephthalic acid or isophthalic acid, as long as the copolymerization does not deteriorate the biodegradability of the polyester resin. Such a copolymerized polyester resin also falls within the scope of the biodegradable polyester resin in the present invention.

Specific examples of the biodegradable aliphatic polyester resin (X) in the present invention include polylactic acid, polyglycolic acid, poly(3-hydroxybutyric acid), poly(3-hydroxyvaleric acid), poly(3-hydroxycaproic acid), polyethylene succinate, polybutylene succinate, and copolymers and blends of any of these polymers. Examples of the biodegradable aliphatic polyester resin copolymerized with the aromatic dicarboxylic acid include poly(butylene adipate/butylene terephthalate) copolymers and poly(ethylene adipate/ethylene terephthalate) copolymers. These resins may be partly cross-linked or modified with an epoxy compound. The content ratio of D-lactic acid and L-lactic acid in the polylactic acid is not particularly limited.

The biodegradable aliphatic polyester resin (X) is typically prepared by a known melt polymerization method and, as required, in combination with a solid phase polymerization method. Poly(3-hydroxybutyric acid) and poly(3-hydroxyvaleric acid) may be microbiologically prepared.

A cross-linked structure or a branch structure may be introduced in the biodegradable aliphatic polyester resin (X). Exemplary methods for introducing the cross-linked structure or the branch structure include addition of an organic peroxide, combinational use of an organic peroxide and a radically polymerizable compound, irradiation with radiation ray, and preparation in the presence of a multifunctional initiator. Examples of the peroxide include dibutyl peroxide and bis(butylperoxy)diisopropylbenzene. Examples of the radically polymerizable compound include glycidyl methacrylate, ethylene glycol dimethacrylate and polyethylene glycol dimethacrylate. Examples of the multifunctional initiator include ethylene-vinyl alcohol copolymers, partial saponification products of polyvinyl alcohol and cellulose diacetate.

For improvement of the durability of the biodegradable aliphatic polyester resin (X), terminals of the resin may be blocked by addition of a terminal blocking agent. Examples of the terminal blocking agent include carbodiimide, oxazoline and epoxy compounds. The amount of the terminal blocking agent to be added is not particularly limited, but may be 0.1 to 5 parts by mass based on 100 parts by mass of the resin (X).

The molecular weight of the biodegradable aliphatic polyester resin (X) is not particularly limited, but the melt flow index (MFI) of the resin (X) (serving as an index of the molecular weight) as measured at 190°C with a load of 21.2N is in a range of 0.1 to 50, more preferably in a range of 0.2 to 40.

Examples of the polyolefin resin (Y) in the present invention include polyethylene, polypropylene, poly-4-methylpentene-1, polybutene, polyisobutylene and cycloolefin resins, among which polypropylene and polyethylene are preferable and polypropylene is the most preferable. In terms of the heat resistance and the durability, isotactic polypropylene is preferred. The polyolefin resin (Y) may be three-dimensionally cross-linked with an organic peroxide. Alternatively, the polyolefin resin (Y) may be partly chlorinated, or copolymerized with vinyl acetate, acrylic acid, methacrylic acid or maleic anhydride.

The molecular weight of the polyolefin resin (Y) is not particularly limited, but the melt flow index (MFI) of the resin (Y) (serving as an index of the molecular weight) as measured at 190°C with a load of 21.2N is in a range of 0.1 to 50, more preferably in a range of 0.5 to 50.

In the inventive resin composition, the blend ratio of the biodegradable aliphatic polyester resin (X) to the polyolefin resin (Y) should be (X)/(Y)=10-99 mass%/90-1 mass% ((X) / (Y) = 100 parts by mass/1-900 parts by mass). The ratio is preferably (X)/(Y)= 29-91 mass%/71-9 mass% ((X) / (Y) =100 parts by mass/10-250 parts by mass), more preferably (X)/(Y)= 29-83 mass%/71-17 mass% ((X) / (Y) =100 parts by mass/20-250 parts by mass). If the proportion of the polyolefin resin (Y) is less than 1 mass%, the addition of the polyolefin resin is not sufficiently effective, so that the improvement of the impact strength and the heat resistance is insufficient. Further, formation of a continuous phase of the polyolefin resin in the resin composition to be described later tends to be difficult, failing to improve the physical properties of the resin composition. If the proportion of the polyolefin resin (Y) is greater than 90 mass%, the proportion of the biodegradable aliphatic polyester resin is too low, so that the resulting resin composition is no longer eco-friendly.

The inventive resin composition preferably has a total light transmittance of not higher than 60% (as measured with respect to a 3-mm thick test piece in conformity with JIS K7105). If the total light transmittance is higher than 60%, the resin has a lower crystallinity and, hence, a reduced heat resistance. Where the resins (X) and (Y) are melt-mixed as having an MFI ratio in a particular range to form the continuous phase of the resin (Y) as described below, the resin composition has a micro phase separation structure. Therefore, the heat resistance, the impact resistance and the durability are further improved, though the total light transmittance is further reduced.

It is preferred to add an epoxy-containing additive to the inventive resin composition. The epoxy-containing additive is not particularly limited, as long as an epoxy group is contained in the additive. Since the epoxy group mainly reacts with the biodegradable aliphatic polyester resin (X), the epoxy-containing additive preferably has a skeletal structure containing a resin structure such as of polyethylene, polypropylene, polystyrene, polybutene, polybutadiene, hydrogenated polybutadiene, polyethylene butylene, polyisobutylene or cycloolefin which is highly compatible with the polyolefin resin (Y). The resin structure may be copolymerized with a resin component such as of vinyl, acryl, ester or amide. Further, the epoxy group may be directly added to the aforesaid resin structure, or a polymer to which the epoxy group is added may be grafted to the resin structure.

The epoxy-containing additive particularly preferably has a structure such that the epoxy group is added to a polyethylene or polypropylene skeleton. Commercially available examples of the epoxy-containing additive having such a structure include BONDFAST 2C and BONDFAST E (available from Sumitomo Chemical Co., Ltd.), ARUFON UG4030 (available from Toa Gosei Co., Ltd.), MODIPER A4200 (available from Nippon Oil & Fats Co., Ltd.) and the like.

The epoxy-containing additive improves cohesion between the biodegradable aliphatic polyester resin (X) and the polyolefin resin (Y) with the epoxy group thereof reacted with the biodegradable aliphatic polyester resin (X) and with the skeletal portion thereof compatibilized with the polyolefin resin (Y), whereby a sea-island structure formed by the biodegradable aliphatic polyester resin (X) and the polyolefin resin (Y) is immobilized and has smaller size islands. As a result, the resins (X) and (Y) are firmly combined with each other at their interfaces, so that the resin composition is improved in physical properties such as impact resistance, appearance and moldability. Further, the epoxy-containing additive is expected to have an effect such as provided by the terminal blocking agent, thereby improving the durability.

The amount of the epoxy-containing additive to be added is preferably 0.1 to 30 parts by mass, more preferably 0.2 to 20 parts by mass, further preferably 0.3 to 15 parts by mass, based on a total of 100 parts by mass of the biodegradable aliphatic polyester resin (X) and the polyolefin resin (Y). If the amount is less than 0.1 part by mass, the polyolefin resin and the biodegradable aliphatic polyester resin are insufficiently compatibilized with each other. If the amount is greater than 30 parts by mass, the sea-island structure formed by the resins (X) and (Y) in the resin composition tends to be disrupted.

An inorganic filler is preferably added to the inventive resin composition. Examples of the inorganic filler include talc, mica, silica, calcium carbonate, zinc carbonate, warrastonite, alumina, magnesium oxide, calcium silicate, sodium aluminate, calcium aluminate, sodium aluminosilicate, magnesium silicate, glass balloon, carbon black, zinc oxide, antimony trioxide, zeolites, bentonite, hydrotalcite, metal fibers, metal whiskers, ceramic whiskers, titanium oxide, potassium titanate, boron nitride, graphite, glass fibers and carbon fibers, among which talc, mica and silica are preferable and talc is the most preferable. These inorganic fillers may be used either alone or in combination. Where the inorganic filler is added to the resin composition with cohesion between the polyolefin resin and the biodegradable aliphatic polyester resin improved by the epoxy-containing additive, the sea-island structure formed by the polyolefin resin and the biodegradable aliphatic polyester resin is stabilized, thereby improving the appearance, the moldability and the heat resistance.

The amount of the inorganic filler to be added is preferably 1 to 30 parts by mass, more preferably 5 to 20 parts by mass based on a total of 100 parts by mass of the resin (X) and the resin (Y). If the amount is less than 1 part by mass, the effect of the addition is reduced. If the amount is greater than 30 parts by mass, the physical properties are liable to be deteriorated, for example, the flexibility of the resin composition is reduced. The particle diameter of the inorganic filler is not particularly limited, but is preferably in a range of 0.5 to 50µm.

The preparation method for the inventive resin composition is to melt-mix the biodegradable aliphatic polyester resin (X) and the polyolefin resin (Y) with the use of a common extruder. To improve the mixing homogeneousness and the dispersibility, a biaxial extruder is preferably used. Where the epoxy-containing additive, the inorganic filler, the terminal blocking agent and the like are added, the material resins and these additives may be first dry-blended and then charged into a hopper, or the additives may be fed through a feeder or the like provided in the midst of the extruder. Alternatively, the additives may be dissolved or dispersed in a liquid such as a plasticizer, and added in a liquid form.

When the biodegradable aliphatic polyester resin (X) and the polyolefin resin (Y) are melt-mixed, the ratio (MI_{E}/MI_{PO}) of the melt flow index (MI_{E}) of the biodegradable aliphatic polyester resin (X) as measured at 190°C with a load of 21.2N to the melt flow index (MI_{PO}) of the polyolefin resin (Y) as measured at 190°C with a load of 21.2N is in a range of 0.1 to 10, more preferably in a range of 0.15 to 8. The melt flow index (MFI) is herein measured at 190°C, because this temperature is generally employed for the measurement of the MFI and is close to a melt-mixing temperature at which the resins (X) and (Y) are melt-mixed for the preparation of the inventive resin composition.

Even if the amount of the polyolefin resin (Y) is smaller than the amount of the biodegradable aliphatic polyester resin (X), the resin (Y) is allowed to form a continuous phase in the resin composition by relative viscosity thereof properly adjusted by setting the MFI ratio MI_{E}/MI_{PO} in a range of 0.1 to 10. That is, a sea-island structure having island portions of the biodegradable aliphatic polyester resin (X) and a sea portion of the polyolefin resin (Y) is formed. Such a micro structure drastically improves the impact resistance, the heat resistance and the durability. If the MFI ratio MI_{E}/MI_{PO} is lower than 0.1, the polyolefin resin (Y) is liable to form a discontinuous phase, so that the impact strength and the durability are insufficient.

Whether the micro structure formed by the resins in the resin composition is the continuous phase or the discontinuous phase is determined by observing a section of a product molded from the resin composition by a scanning or transmissive electron microscope. At this time, the structure can be more clearly observed by dissolving the biodegradable aliphatic polyester resin portions in a solvent such as chloroform or methylene chloride.

A pigment, a heat stabilizer, an antioxidant, a weather resistant agent, a flame retarder, a plasticizer, a lubricant, a mold release agent, an antistatic agent, a dispersant, an organic filler and the like may be added to the inventive resin composition, as long as the properties of the resin composition are not significantly deteriorated. Examples of the heat stabilizer and the antioxidant include hindered phenols, phosphorus compounds, hindered amines, sulfur compounds, copper compounds and halides of alkali metals, and mixtures of any of these compounds. Examples of the organic filler include naturally existing polymers such as starch, cellulose particles, wood powder, bean curd refuse, chaff, wheat bran and kenaf, and products obtained by modifying any of these polymers.

A swellable layered silicate may be added to the inventive resin composition for further improvement of the heat resistance, the crystallization rate, the moldability and the like of the resin composition. The amount of the swellable layered silicate to be added is not particularly limited, but is preferably 0.05 to 30 parts by mass based on a total of 100 parts by mass of the resins (X) and (Y). A method for the addition of the swellable layered silicate may be such that the swellable layered silicate is added to one or both of the resins (X) and (Y) before the mixing, or such that the swellable layered silicate is added when the resins (X) and (Y) are mixed. The swellable layered silicate dispersed in the resins has an interlayer distance of not smaller than 20A (2nm) and a particle diameter of about 1 to about 1000nm. Examples of the swellable layered silicate include smectite, vermiculite and swellable fluorinated mica. Examples of the smectite include montmorillonite, beidellite, hectorite and saponite. Examples of the swellable fluorinated mica include Na-type silicon tetrafluoride mica, Na-type taeniolite and Li-type taeniolite.

The swellable layered silicate may be preliminarily treated with organic cations as required in order to improve its dispersablility to the resins. Examples of the organic cations include protonized primary to tertiary amines, quaternary ammoniums and organic phosphoniums. Examples of the primary amines include octylamine, dodecylamine and octadecylamine. Examples of the secondary amines include dioctylamine, methyloctadecylamine and dioctadecylamine. Examples of the tertiary amines include trioctylamine, dimethyldodecylamine, didodecylmonomethylamine dimethyloctylamine, dimethyldecylamine, dimethyllaurylamine, dimethylmyristylamine, dimethylpalmitylamine, dimethylstearylamine, dilaurylmonomethylamine, tributylamine, trioctylamine and N,N-dimethylaniline. Examples of the quaternary ammoniums include tetraethylammonium, octadecyltrimethylammonium, dimethyldioctadecylammonium, dihydroxyethylmethyloctadecylammonium, methyldodecylbis(polyethylene glycol)ammonium and methyldiethyl(polypropylene glycol)ammonium. Examples of the organic phosphoniums include tetraethylphosphonium, tetrabutylphosphonium, tetrakis(hydroxymethyl)phosphonium and 2-hydroxyethyltriphenylphosphonium. These cations may be used either alone or in combination.

A molded product of the present invention can be produced from the inventive resin composition by using a common molding method. Particularly in an injection molding method, a mold temperature range required for molding the inventive resin composition into a heat resistant product is widened as compared with the prior art. Accordingly, an injection molding cycle is shortened, thereby significantly improving the productivity. Where a heat resistant product is molded from polylactic acid alone according to the prior art, for example, the mold temperature should be 100°C or higher. The inventive resin composition can be molded into a product having substantially the same level of heat resistance as in the prior art even if the mold temperature is lower than 100°C as well as 100°C or higher. The mold temperature is preferably in a range of 50°C to 90°C, more preferably in a range of 60 to 90°C.

Specific examples of the product molded from the inventive resin composition are as follows. For example, sheets, foam sheets and pipes are produced from the inventive resin composition by an extrusion molding method, and employed as materials for cards such as credit cards, desk pads, clear files, straws, agricultural and horticultural rigid/soft pipes and pipe covers, and the like. Further, the sheets and the like may be deep-drawn by vacuum forming, air pressure forming or vacuum air pressure forming or stamped for production of food containers, agricultural, horticultural and industrial containers, commodities, blister packages, press-through packages, collapsible shock absorbers, building materials, packings, partition plates, signboards, bulletin boards, automotive interior materials, mannequins, shoe soles, brims, core materials and the like.

Further, an injection-molded product may be produced from the inventive resin composition by an injection molding method. The mode of the injection-molded product is not particularly limited. Specific examples of the injection-molded product include: tableware such as dishes, bowls, pots, chopsticks, spoons, forks, knives and trays; fluid containers (beverage cups and beverage bottles for dairy products, cold beverages, alcoholic beverages and the like, temporary preservation containers for seasonings such as soy sauce, sauce, mayonnaise, ketchup and cooking oil, containers for shampoos, hair conditioners and the like, cosmetic containers, containers for agricultural chemicals, and the like); container caps; stationery and office equipment such as rulers, writing utensils, clear cases, CD cases and chairs; various storage containers such as cargo containers; daily commodities such as corner trash bags, garbage cans, wash bowls, toothbrushes, combs and hungers; garment associated goods such as fasteners and buttons; agricultural and horticultural materials such as plant pots and seeding pots; toys such as plastic models; electrical appliance resin parts such as air conditioner panels, refrigerator trays and housings for personal computers and mobile phones; automotive resin parts such as bumpers, interior panels and door trims; fishing goods such as fishing rods and lures; sporting goods such as rackets and protectors; and building materials.

### EXAMPLES

The present invention will hereinafter be described more specifically by way of examples thereof. However, it should be understood that the invention be not limited to the examples described below.

The following measurement methods were employed for evaluation of Examples and Comparative Examples described blow.

### (1) Melt flow index (MFI)

In conformity with JIS K7210, the melt flow index was measured at a temperature of 190°C with a load of 21.2N (2.16kg) as specified in a table of Appendix A. The unit of melt flow index is g/10min.

### (2) Impact strength

In conformity with ASTM-256, a test piece having a size of 65mm×12mm×3mm was prepared and provided with a notch, and the Izot impact strength of the test piece was measured.

### (3) Thermal deformation temperature

In conformity with ASTEM-648, a test piece having a size of 125mm×12mm×3mm was prepared, and the thermal deformation temperature of the test piece was measured with a load of 0.48MPa.

### (4) Durability

A test piece having a size of 125mmx12mmx3mm was stored in a constant temperature/constant humidity chamber under 60°C/95%RH conditions for 10 days. Thereafter, a flexural test was performed on the test piece by applying a load to the test piece at a deformation rate of 2mm/min in conformity with ASTM-790 to measure the flexural strength for determination of the durability.

### (5) Flexural strength

In conformity with ASTM-790, a test piece having a size of 125mm×12mm×3mm was prepared, and the flexural strength of the test piece was measured by applying a load to the test piece at a deformation rate of 2mm/min.

### (6) Molecular weight

The molecular weight of the biodegradable aliphatic polyester resin (X) was measured at 40°C with the use of tetrahydrofuran as an eluent by means of a gel permeation chromatography (GPC) device (available from Shimadzu Co., Ltd.) having a differential refractometer, and expressed on the basis of polystyrene calibration standards. Where a sample was less soluble in tetrahydrofuran, the sample was dissolved in a small amount of chloroform and then diluted by tetrahydrofuran. In the case of polybutylene succinate, the measurement was performed by using chloroform alone as the eluent.

### (7) Observation of micro structure

A resin pellet or an injection-molded test piece was immersed in liquid nitrogen and fractured into pieces, which were in turn immersed in chloroform to leach out the biodegradable aliphatic polyester resin (X). Then, a section of the test piece was observed by a scanning electron microscope to determine whether the remaining resin (polyolefin resin (Y)) formed a continuous phase. Alternatively, the pellet or the test piece was sliced, and the resulting slice was immersed in chloroform and then observed in the same manner as described above.

### (8) Total light transmittance

A test piece having a size of 50mmx50mmx3mm (thickness) was prepared, and the total light transmittance was measured with respect to the thickness of the test piece by means of a colorimeter (available from Nippon Denshoku Kogyo Co., Ltd.) in conformity with JIS K7105 (Light Transmittance Measurement Method A).

### (9) Appearance

A surface of an injection-molded test piece was visually inspected. Where the surface of the test piece was uniform and smooth without defects such as sink, swell and exfoliation, the test piece was rated excellent (Ⓞ). Where the test piece was slightly inferior to the test piece rated excellent (Ⓞ) but without defects such as sink, swell and exfoliation on the surface thereof, the test piece was rated good (O). Where the surface of the test piece partly had defects such as sink, swell and exfoliation, the test piece was rated no good (Δ). Where the test piece had a bad appearance with defects such as sink, swell and exfoliation on the surface thereof, the test piece was rated bad (x).

Ingredients used for Examples and Comparative Examples are as follows. A parenthesized value for an MFI value is a measurement temperature.

### (1) Biodegradable aliphatic polyester resins

PLA-1: Polylactic acid (NATUREWORKS available from Cargill Dow Corporation and having a weight average molecular weight of 200,000, an L-lactic acid ratio of 99%, a D-lactic acid ratio of 1% and an MFI (190°C) of 2.3)
PLA-2: Polylactic acid (NATUREWORKS available from Cargill Dow Corporation and having a weight average molecular weight of 180,000, an L-lactic acid ratio of 90%, a D-lactic acid ratio of 10% and an MFI (190°C) of 4.5)
PLA-3: Polylactic acid (NATUREWORKS available from Cargill Dow Corporation and having a weight average molecular weight of 160,000, an L-lactic acid ratio of 99%, a D-lactic acid ratio of 1% and an MFI (190°C) of 8.9)
PLA-X: Modified polylactic acid (prepared by mixing 100 parts by mass of PLA-3, 0.1 part by mass of polyethylene glycol dimethacrylate and 0.2 parts by mass of di-t-butyl peroxide and melting and extruding the resulting mixture and having an MFI (190°C) of 1.0)
PBS: Polybutylene succinate (GsPLa available from Mitsubishi Chemical Corporation and having a weight average molecular weight of 190,000 and an MFI (190°C) of 4.2)

### (2) Polyolefin resins

PP-1: Polypropylene (K7014 available from Chisso Corporation and having an MFI (190°C) of 0.6)
PP-2: Polypropylene (K4017 available from Chisso Corporation and having an MFI (190°C) of 3.3)
PP-3: Polypropylene (K5019 available from Chisso Corporation and having an MFI (190°C) of 5.4)
PP-4: Polypropylene (K5360 available from Chisso Corporation and having an MFI (190°C) of 24.8)
PE-1: Polyethylene (YF30 available from Japan Polyethylene Co., Ltd and having an MFI (190°C) of 1.1)
PE-2: Polyethylene (LF547 available from Japan Polyethylene Co., Ltd and having an MFI (190°C) of 3.8)

### (3) Epoxy-containing additive

BF-2C: Epoxy-containing polyethylene copolymer (BONDFAST 2C available from Sumitomo Chemical Co., Ltd.)
BF-E: Epoxy-containing polyethylene copolymer (BONDFAST E available from Sumitomo Chemical Co., Ltd.)
AR-UG: Epoxy-containing acryl-styrene polymer (ARUFON UG4030 available from Toa Gosei Co., Ltd.)
MD-A: Epoxy-containing polyethylene-acryl graft copolymer (MODIPER A4200 available from Nippon Oil & Fats Co., Ltd.)

### (4) Inorganic filler

Tc: Talc (MW-HS-T available from Hayashi Kasei Co., Ltd. and having an average particle diameter of 2.7µm)
Mc: Mica (SUZOLITE 325-S available from Kuraray Co., Ltd. and having an average particle diameter of 40µm)
Sc: Silica (MIZUKASIL available from Mizusawa Industrial Chemicals, Ltd. and having an average particle diameter of 2.0µm)

### Example 1

First, 70 parts by mass of PLA-1 and 30 parts by mass of PP-2 were mixed at an extrusion temperature of 190°C and a die outlet temperature of 190°C by means of a biaxial extruder PCM-30 (including a die having three 4-mm diameter holes) available from Ikegai Co., Ltd. The resulting resin mixture was extruded into a strand, which was cooled in a water bath and then cut into pellets by a pelletizer. The resulting resin composition pellets were dried, and then injection-molded under conditions with a cylinder temperature of 190°C, an injection pressure of 100MPa and an injection period of 20 seconds by means of an injection molding machine IS-80G available from Toshiba Machinery Co., Ltd. Then, the physical properties of the resulting product were evaluated. The mold temperature was set at three levels, i.e., 15°C, 85°C and 120°C, and the cooling period was 20 seconds at 15°C and 80 seconds at 85°C and 120°C.

### Examples 2 to 5

Resin compositions were prepared in substantially the same manner as in Example 1 except that different resin blend ratios were employed as shown in Table 1, and evaluated.

### Examples 6 to 11

Resin compositions were prepared in substantially the same manner as in Example 1 except that different types and amounts of polyolefin resins were used as shown in Table 1, and evaluated.

In Examples 8 to 11 in which polyethylene was used as the polyolefin resin, the resin compositions were insufficient in heat resistance, so that the injection molding at a mold temperature of 120°C was not carried out.

The results for Examples 1 to 11 are collectively shown in Table 1.

**Table 1**

| | | Example | | | | | | | | | | | Comparative Example | | |
|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 |
| Formulation (parts by mass) | | | | | | | | | | | | | | | |
| Biodegradable polyester resin | | | | | | | | | | | | | | | |
| | MFI | | | | | | | | | | | | | | |
| PLA-1 | 2.3 | 70 | 60 | 30 | 10 | 95 | 70 | 70 | 70 | 70 | 60 | 60 | 99.5 | - | 100 |
| PLA-2 | 4.5 | - | - | - | - | - | - | - | - | - | - | - | - | - | - |
| PLA-3 | 8.9 | - | - | - | - | - | - | - | - | - | - | - | - | - | - |
| PLA-X | 1.0 | - | - | - | - | - | - | - | - | - | - | - | - | - | - |
| PBS | 4.2 | - | - | - | - | - | - | - | - | - | - | - | - | - | - |
| Polyolefin resin | | | | | | | | | | | | | | | |
| | MFI | | | | | | | | | | | | | | |
| PP-1 | 0.6 | - | - | - | - | - | 30 | - | - | - | - | - | - | - | - |
| PP-2 | 3.3 | 30 | 40 | 70 | 90 | 5 | - | - | - | - | - | - | 0.5 | 100 | - |
| PP-3 | 5.4 | - | - | - | - | - | - | 30 | - | - | - | - | - | - | - |
| PE-1 | 1.1 1 | - | - | - | - | - | - | - | 30 | - | 40 | - | - | - | - |
| PE-2 | 3.8 | - | - | - | - | - | - | - | - | 30 | - | 40 | - | - | - |
| Epoxy-containing additive | | | | | | | | | | | | | | | |
| BF-2C | | - | - | - | - | - | - | - | - | - | - | - | - | - | - |
| BF-E | | - | - | - | - | - | - | - | - | - | - | - | - | - | - |
| AR-UG | | - | - | - | - | - | - | - | - | - | - | - | - | - | - |
| MD-A | | - | - | - | - | - | - | - | - | - | - | - | - | - | - |
| Inorganic filler | | | | | | | | | | | | | | | |
| Tc | | - | - | - | - | - | - | - | - | - | - | - | - | - | - |
| Me | | - | - | - | - | - | - | - | - | - | - | - | - | - | - |
| Sc | | - | - | - | - | - | - | - | - | - | - | - | - | - | - |
| Swellable lamellar silicate | | - | - | - | - | - | - | - | - | - | - | - | - | - | - |
| Carbodiimide | | - | - | - | - | - | - | - | - | - | - | - | - | - | - |
| MFI ratio (MI_{E}/MI_{PO}) | | 0.7 | 0.7 | 0.7 | 0.7 | 0.7 | 3.8 | 0.43 | 2.1 | 0.61 | 2.1 | 0.61 | 0.7 | - | - |
| Phase of Polyolefin resin | | *1 | *1 | *1 | *1 | *1 | *1 | *1 | *1 | *1 | *1 | *1 | *2 | - | - |
| Physical properties | | | | | | | | | | | | | | | |
| Impact strength (J/m) | | | | | | | | | | | | | | | |
| Mold temperature (°C) | 15 | 62 | 47 | 35 | 33 | 29 | 81 33 | 33 | 75 | 76 | 60 | 59 | 27 | 18 | 27 |
| | 85 | 70 | 58 | 33 | 35 | 33 | 85 | 34 | 78 | 77 | 65 | 63 | - | 20 | - |
| | 120 | 88 | 99 | 33 | 39 | 42 | 98 | 43 | - | - | - | - | - | - | - |
| Thermal deformation temperature (°C) | | | | | | | | | | | | | | | |
| Mold temperature (°C) | 15 | 60 | 67 | 124 | 125 | 59 | 59 | 59 | 60 | 59 | 61 | 60 | 57 | 105 | 57 |
| | 85 | 90 | 88 | 130 | 132 | 72 | 85 | 91 | 81 | 80 | 105 | 108 | - | 110 | - |
| | 120 | 133 | 136 | 138 | 139 | 120 | 130 | 124 | - | - | - | - | - | 120 | - |
| Total light transmittance (%) | | | | | | | | | | | | | | | |
| Mold temperature | 15 | 42 | 39 | 37 | 45 | 43 | 40 | 42 | 41 | 42 | 32 | 29 | 90 | 56 | 94 |
| (°C) | 85 | 39 | 38 | 35 | 43 | 40 | 40 | 41 | 40 | 41 | 30 | 28 | - | 53 | - |
| | 120 | 37 | 38 | 35 | 41 | 39 | 39 | 39 | - | - | - | - | - | 50 | - |
| Durability (flexural strength retention rate) % | | 65 | 70 | 85 | 88 | 58 | 60 | 59 | 61 | 62 | 62 | 58 | 16 | 100 | 14 |
| Appearance | | | | | | | | | | | | | | | |
| Mold temperature (°C) | 15 | ○ | ○ | ○ | ○ | ○ | ○ | ○ | ○ | ○ | ○ | ○ | × | Ⓞ | ○ |
| | 85 | ○ | ○ | ○ | Δ | ○ | ○ | ○ | ○ | ○ | ○ | ○ | - | Ⓞ | - |
| | 120 | ○ | ○ | Δ | Δ | ○ | ○ | ○ | - | - | - | - | - | | - |

| | | | | | | | | | | | | | | | |
|---|---|---|---|---|---|---|---|---|---|---|---|---|---|---|---|
| *1: Continuous phase *2: Discontinuous phase The evaluation of the durability was performed on a product molded at a mold temperature of 120°C (85°C for Examples 8 to 11, and 15°C for Comparative Examples 1 and 3). | | | | | | | | | | | | | | | |

### Examples 12 to 15

Resin compositions were prepared in substantially the same manner as in Example 1 except that different types of biodegradable aliphatic polyester resins were used, and then evaluated.

### Examples 16 to 18

Resin compositions of Examples 16 to 18 were prepared in substantially the same manner as in Example 1 except that PLA-X as the biodegradable aliphatic polyester resin and PP-3 as the polyolefin resin were blended in different blend ratios, and then evaluated.

The results for the Examples 12 to 18 are collectively shown in Table 2.

**Table 2**

| | | Example | | | | | | | |
|---|---|---|---|---|---|---|---|---|---|
| | | (1) | 12 | 13 | 14 | 15 | 16 | 17 | 18 |
| | | Formulation (parts by mass) | | | | | | | |
| Biodegradable polyester resin | | | | | | | | | |
| | MFI | | | | | | | | |
| PLA-1 | 2.3 | 70 | - | - | - | - | - | - | - |
| PLA-2 | 4.5 | - | 70 | - | - | - | - | - | - |
| PLA-3 | 8.9 | - | - | 70 | - | - | - | - | |
| PLA-X | 1.0 | - | - | - | 70 | - | 70 | 60 | 30 |
| PBS | 4.2 | - | - | - | - | 70 | - | - | - |
| Polyolefin resin | | | | | | | | | |
| | MFI | | | | | | | | |
| PP-1 | 0.6 | - | - | - | - | - | - | - | - |
| PP-2 | 3.3 | 30 | 30 | 30 | 30 | 30 | - | - | - |
| PP-3 | 5.4 | - | - | - | - | - | 30 | 40 | 70 |
| PE-1 | 1.1 | - | - | - | - | - | - | - | - |
| PE-2 | 3.8 | - | - | - | - | - | - | - | - |
| Epoxy-containing additive | | | | | | | | | |
| BF-2C | | - | - | - | - | - | - | - | - |
| BF-E | | - | - | - | - | - | - | - | - |
| AR-UG | | - | - | - | - | - | - | - | - |
| MD-A | | - | - | - | - | - | - | - | - |
| Inorganic filler | | | | | | | | | |
| Tc | | - | - | - | - | - | - | - | - |
| Mc | | - | - | - | - | - | - | - | - |
| Sc | | - | - | - | - | - | - | - | - |
| Swellable lamellar silicate | | - | - | - | - | - | - | - | - |
| Carbodiimide | | - | - | - | - | - | - | - | - |
| MFI ratio (MI_{E}/MI_{PO}) | | 0.7 | 14 | 27 | 0.30 | 13 | 0.19 | 0.19 | 0.19 |
| Phase of Polyolefin resin | | *1 | *1 | *1 | *1 | *1 | *1 | *1 | *1 |
| Physical properties | | | | | | | | | |
| Impact strength (J/m) | | | | | | | | | |
| Mold temperature (°C) | 15 | 62 | 42 | 36 | 47 | 89 | 47 | 39 | 33 |
| | 85 | 70 | 52 | 45 | 50 | 92 | 52 | 43 | 34 |
| | 120 | 88 | 67 | 60 | 57 | 109 | 56 | 53 | 35 |
| Thermal deformation temperature (°C) | | | | | | | | | |
| Mold temperature (°C) | 15 | 60 | 60 | 58 | 59 | 82 | 59 | 63 | 110 |
| | 85 | 90 | 90 | 85 | 88 | 105 | 81 | 88 | 120 |
| | 120 | 133 | 122 | 122 | 121 | 132 | 122 | 128 | 131 |
| Total light transmittance (%) | | | | | | | | | |
| Mold temperature (°C) | 15 | 42 | 39 | 38 | 35 | 33 | 38 | 37 | 37 |
| | 85 | 39 | 38 | 38 | 35 | 33 | 39 | 36 | 37 |
| | 120 | 37 | 37 | 36 | 34 | 32 | 38 | 36 | 37 |
| Durability (flexural strength retention rate) % | | 65 | 59 | 55 | 57 | 60 | 51 | 59 | 81 |
| Appearance | | | | | | | | | |
| Mold temperature (°C) | 15 | ○ | ○ | ○ | ○ | ○ | ○ | ○ | ○ |
| | 85 | ○ | ○ | ○ | ○ | ○ | ○ | ○ | ○ |
| | 120 | ○ | ○ | ○ | ○ | ○ | ○ | ○ | Δ |

| | | | | | | | | | |
|---|---|---|---|---|---|---|---|---|---|
| *1: Continuous phase The evaluation of the durability was performed on a product molded at a mold temperature of 120°C. | | | | | | | | | |

### Examples 19 to 25

Resin compositions were prepared in substantially the same manner as in Example 1 except that different types and amounts of epoxy-containing additives were additionally used, and then evaluated.

### Examples 26 to 28

Resin compositions were prepared in substantially the same manner as in Example 1 except that different types of inorganic fillers were additionally used.

The results of the evaluation of the Examples 19 to 28 are collectively shown in Table 3.

**Table 3**

| | | Example | | | | | | | | | | |
|---|---|---|---|---|---|---|---|---|---|---|---|---|
| | | (1) | 19 | 20 | 21 | 22 | 23 | 24 | 25 | 26 | 27 | 28 |
| Formulation (parts by mass) | | | | | | | | | | | | |
| Biodegradable polyester resin | | | | | | | | | | | | |
| | MFI | | | | | | | | | | | |
| PLA-1 | 2.3 | 70 | 70 | 70 | 70 | 70 | 70 | 70 | 70 | 70 | 70 | 70 |
| PLA-2 | 4.5 | - | - | - | - | - | - | - | - | - | - | - |
| PLA-3 | 8.9 | - | - | - | - | - | - | - | - | - | - | - |
| PLA-X | 1.0 | - | - | - | - | - | - | - | - | - | - | - |
| PBS | 4.2 | - | - | - | - | - | - | - | - | - | - | - |
| Polyolefin resin | | | | | | | | | | | | |
| | MFI | | | | | | | | | | | |
| PP-1 | 0.6 | - | - | - | - | - | - | - | - | - | - | - |
| PP-2 | 3.3 | 30 | 30 | 30 | 30 | 30 | 30 | 30 | 30 | 30 | 30 | 30 |
| PP-3 | 5.4 | - | - | - | - | - | - | - | - | - | - | - |
| PE-1 | 1.1 | - | - | - | - | - | - | - | - | - | - | - |
| PE-2 | 3.8 | - | - | - | - | - | - | - | - | - | - | - |
| Epoxy-containing additive | | | | | | | | | | | | |
| BF-2C | | - | 2 | 5 | 10 | 25 | - | - | - | - | - | - |
| BF-E | | - | - | - | - | - | 5 | - | - | - | - | - |
| AR-UG | | - | - | - | - | - | - | 5 | - | - | - | - |
| MD-A | | - | - | - | - | - | - | - | 5 | - | - | - |
| Inorganic filler | | | | | | | | | | | | |
| Tc | | - | - | - | - | - | - | - | - | 10 | - | - |
| Mc | | - | - | - | - | - | - | - | - | - | 10 | |
| Sc | | - | - | - | - | - | - | - | - | | - | 10 |
| Swellable lamellar silicate | | - | - | - | - | - | - | - | - | - | - | - |
| Carbodiimide | | - | - | - | - | - | - | - | - | - | - | - |
| MFI ratio (MI_{E}/MI_{PO}) | | 0.7 | 0.7 | 0.7 | 0.7 | 0.7 | 0.7 | 0.7 | 0.7 | 0.7 | 0.7 | 0.7 |
| Phase of Polyolefin resin | | *1 | *1 | *1 | *1 | *1 | *1 | *1 | *1 | *1 | *1 | *1 |
| Physical properties | | | | | | | | | | | | |
| Impact strength (J/m) | | | | | | | | | | | | |
| Mold temperature (°C) | 15 | 62 | 61 | 63 | 65 | 65 | 60 | 62 | 63 | 55 | 50 | 52 |
| | 85 | 70 | 70 | 73 | 74 | 75 | 71 | 71 | 72 | 60 | 53 | 57 |
| | 120 | 88 | 75 | 89 | 90 | 91 | 85 | 87 | 86 | 66 | 56 | 61 |
| Thermal deformation temperature (°C) | | | | | | | | | | | | |
| Mold temperature (°C) | 15 | 60 | 66 | 65 | 64 | 65 | 68 | 65 | 63 | 63 | 62 | 62 |
| | 85 | 90 | 95 | 94 | 92 | 93 | 95 | 96 | 92 | 89 | 93 | 91 |
| | 120 | 133 | 135 | 135 | 133 | 132 | 138 | 133 | 134 | 125 | 128 | 128 |
| Total light transmittance (%) | | | | | | | | | | | | |
| Mold temperature (°C) | 15 | 42 | 41 | 42 | 42 | 40 | 42 | 41 | 43 | 35 | 34 | 35 |
| | 85 | 39 | 40 | 39 | 39 | 38 | 39 | 38 | 39 | 36 | 36 | 36 |
| | 120 | 37 | 38 | 37 | 36 | 35 | 38 | 37 | 38 | 35 | 35 | 34 |
| Durability (flexural strength retention rate) % | | 65 | 70 | 72 | 75 | 77 | 75 | 78 | 71 | 55 | 58 | 60 |
| Appearance | | | | | | | | | | | | |
| Mold temperature (°C) | 15 | ○ | ○ | Ⓞ | Ⓞ | Ⓞ | Ⓞ | Ⓞ | Ⓞ | Ⓞ | Ⓞ | Ⓞ |
| | 85 | ○ | ○ | ○ | ○ | Ⓞ | ○ | ○ | ○ | ○ | ○ | ○ |
| | 120 | ○ | ○ | ○ | ○ | ○ | ○ | ○ | ○ | ○ | ○ | ○ |

| | | | | | | | | | | | | |
|---|---|---|---|---|---|---|---|---|---|---|---|---|
| *1: Continuous phase The evaluation of the durability was performed on a product molded at a mold temperature of 120°C. | | | | | | | | | | | | |

### Examples 29 to 35

Resin compositions were prepared in substantially the same manner as in Example 1 except that different types and amounts of epoxy-containing additives and different types and amounts of inorganic fillers were additionally used in combination.

### Examples 36 to 38

Resin compositions of Examples 36 to 38 were prepared in substantially the same manner as in Example 30 except that different amounts of an organically treated swellable layered silicate (ESBEN W available from Hojun Co., Ltd.) were additionally mixed and the resulting mixtures were charged in the extruder.

### Examples 39, 40, 41

Resin compositions were prepared in substantially the same manner as in Examples 1, 20, 30 except that 0.7 parts by mass of a carbodiimide compound (STABAKSOL I available from Bayer Corporation) as the terminal blocking agent was additionally mixed and the resulting mixtures were charged in the extruder.

The results of the evaluation of the Examples 29 to 41 are collectively shown in Table 4.

**Table 4**

| | | Example | | | | | | | | | | | | | |
|---|---|---|---|---|---|---|---|---|---|---|---|---|---|---|---|
| | | (1) | 29 | 30 | 31 | 32 | 33 | 34 | 35 | 36 | 37 | 38 | 39 | 40 | 41 |
| Formulation (parts by mass) | | | | | | | | | | | | | | | |
| Biodegradable polyester resin | | | | | | | | | | | | | | | |
| | MFI | | | | | | | | | | | | | | |
| PLA-1 | 2.3 | 70 | 70 | 70 | 70 | 30 | 70 | 70 | 70 | 70 | 70 | 70 | 70 | 70 | 70 |
| PLA-2 | 4.5 | - | - | - | - | - | - | - | - | - | - | - | - | - | - |
| PLA-3 | 8.9 | - | - | - | - | - | - | - | - | - | - | - | - | - | - |
| PLA-X | 1.0 | - | - | - | - | - | - | - | - | - | - | - | - | - | - |
| PBS | 4.2 | - | - | - | - | - | - | - | - | - | - | - | - | - | - |
| Polyolefin resin | | | | | | | | | | | | | | | |
| | MFI | | | | | | | | | | | | | | |
| PP-1 | 0.6 | - | - | - | - | - | - | - | - | - | - | - | - | - | - |
| PP-2 | 3.3 | 30 | 30 | 30 | 30 | 70 | 30 | 30 | 30 | 30 | 30 | 30 | 30 | 30 | 30 |
| PP-3 | 5.4 | - | - | - | - | - | - | - | - | - | - | - | - | - | - |
| PE-1 | 1.1 | - | - | - | - | - | - | - | - | - | - | - | - | - | - |
| PE-2 | 3.8 | - | - | - | - | - | - | - | - | - | - | - | - | - | - |
| Epoxy-containing additive | | | | | | | | | | | | | | | |
| BF-2C | | - | 5 | 5 | 5 | 5 | - | 5 | 5 | 5 | 5 | 5 | - | 5 | 5 |
| BF-E | | - | - | - | - | - | - | - | - | - | - | - | - | - | - |
| AR-UG | | - | - | - | - | - | - | - | - | - | - | - | - | - | - |
| MD-A | | - | - | - | - | - | - | - | - | - | - | - | - | - | - |
| Inorganic filler | | | | | | | | | | | | | | | |
| Tc | | - | 5 | 10 | 20 | 10 | 10 | - | - | 10 | 10 | 10 | - | - | 10 |
| Me | | - | - | - | - | - | - | - | - | - | - | - | - | - | - |
| Sc | | - | - | - | - | - | - | - | 10 | - | - | - | - | - | - |
| Swellable lamellar silicate | | - | - | - | - | - | - | - | - | 2 | 5 | 10 | - | - | - |
| Carbodiimide | | - | - | - | - | - | - | - | - | - | - | - | 0.7 | 0.7 | 0.7 |
| MFI ratio (MI_{E}/MI_{PO}) | | 0.7 | 0.7 | 0.7 | 0.7 | 0.7 | 0.7 | 0.7 | 0.7 | 0.7 | 0.7 | 0.7 | 0.7 | 0.7 | 0.7 |
| Phase of Polyolefin resin | | *1 | *1 | *1 | *1 | *1 | *1 | *1 | *1 | *1 | *1 | *1 | *1 | *1 | *1 |
| Physical properties | | | | | | | | | | | | | | | |
| Impact strength (J/m) | | | | | | | | | | | | | | | |
| Mold temperature (°C) | 15 | 62 | 70 | 75 | 78 | 42 | 65 | 64 | 62 | 73 | 71 | 68 | 60 | 65 | 77 |
| | 85 | 70 | 81 | 84 | 87 | 50 | 74 | 73 | 72 | 81 | 79 | 74 | 72 | 76 | 89 |
| | 120 | 88 | 95 | 98 | 101 | 61 | 87 | 86 | 86 | 96 | 92 | 85 | 86 | 92 | 102 |
| Thermal deformation temperature (°C) | | | | | | | | | | | | | | | |
| Mold temperature (°C) | 15 | 60 | 67 | 68 | 68 | 125 | 73 | 72 | 72 | 75 | 80 | 83 | 61 | 66 | 70 |
| | 85 | 90 | 96 | 97 | 98 | 133 | 98 | 96 | 96 | 100 | 103 | 110 | 89 | 96 | 99 |
| | 120 | 133 | 136 | 136 | 137 | 139 | 139 | 138 | 139 | 138 | 139 | 140 | 125 | 137 | 140 |
| Total light transmittance (%) | | | | | | | | | | | | | | | |
| Mold temperature (°C) | 15 | 42 | 41 | 40 | 39 | 35 | 40 | 40 | 41 | 39 | 38 | 38 | 38 | 43 | 44 |
| | 85 | 39 | 38 | 37 | 36 | 34 | 37 | 38 | 38 | 36 | 35 | 33 | 36 | 40 | 41 |
| | 120 | 37 | 35 | 35 | 34 | 33 | 35 | 36 | 37 | 34 | 34 | 31 | 35 | 38 | 39 |
| Durability (flexural strength retention rate) % | | 65 | 75 | 77 | 78 | 90 | 77 | 78 | 76 | 77 | 77 | 77 | 96 | 99 | 99 |
| Appearance | | | | | | | | | | | | | | | |
| Mold temperature (°C) | 15 | ○ | Ⓞ | Ⓞ | Ⓞ | Ⓞ | Ⓞ | Ⓞ | Ⓞ | Ⓞ | Ⓞ | Ⓞ | ○ | Ⓞ | Ⓞ |
| | 85 | ○ | Ⓞ | Ⓞ | Ⓞ | ○ | Ⓞ | Ⓞ | Ⓞ | Ⓞ | Ⓞ | Ⓞ | ○ | ○ | Ⓞ |
| | 120 | ○ | ○ | ○ | Ⓞ | ○ | ○ | ○ | ○ | ○ | ○ | ○ | ○ | ○ | ○ |

| | | | | | | | | | | | | | | | |
|---|---|---|---|---|---|---|---|---|---|---|---|---|---|---|---|
| *1: Continuous phase The evaluation of the durability was performed on a product molded at a mold temperature of 120°C. | | | | | | | | | | | | | | | |

### Comparative Example 1

A resin composition was prepared in substantially the same manner as in Example 1 except that 99.5 parts by mass of PLA-1 and 0.5 parts by mass of PP-2 were used, and then evaluated. In Comparative Example 1, the resin composition was not solidified at mold temperatures of 85°C and 120°C, so that only a product molded at a mold temperature of 15°C was evaluated.

### Comparative Examples 2 and 3

Resins PP-2 and PLA-1 were each evaluated. In Comparative Example 3, the resin was not solidified at mold temperatures of 85°C and 120°C, so that only a product molded at a mold temperature of 15°C was evaluated.

The results for Comparative Examples 1 to 3 are shown in Table 1.

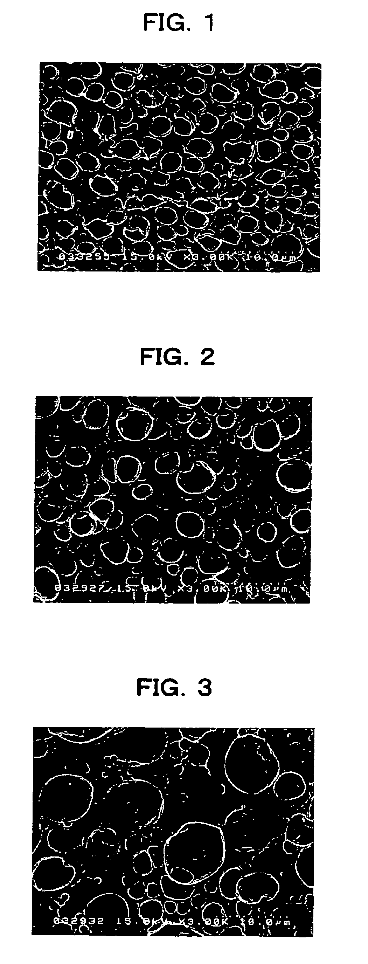

As can be understood from the results, the resin compositions of Examples 1 to 41 each had a higher impact strength and, particularly when being molded at a mold temperature of not lower than 85°C, each had a drastically improved heat resistance. Samples of Examples 1, 3, 4, 20 produced at a mold temperature of 15°C were immersed in chloroform, and then sections of the samples were observed by a scanning electron microscope. The results of the observation are respectively shown in Figs. 1, 2, 3 and 4. Polylactic acid portions were dissolved away in chloroform, so that only a polypropylene portion insoluble in chloroform was observed. As can be seen from Figs. 1 to 4, the polypropylene portion formed a continuous phase. Surprisingly, these compositions each had a higher impact strength than the biodegradable aliphatic polyester resin (Comparative Example 3) and the polyolefin resin (Comparative Example 2). This is because the MFIs of the resins fell within the proper range so that the polypropylene portion formed a continuous phase irrespective of the proportions of the polypropylene and the aliphatic polyester. As a result, these resin compositions each had a lower total light transmittance.

In Examples 3, 4, the heat resistance was increased even with a lower mold temperature, and the impact resistance was improved, as the amount of the polypropylene was increased.

In Examples 1 to 5, the durability was improved over Comparative Example 1 containing a smaller amount of the polyolefin resin and Comparative Example 3 containing no polyolefin resin.

In Examples 6 to 17, the impact strength, the heat resistance and the durability were improved over Example 1 even with different types of aliphatic polyester resins and different types of polyolefin resins. Further, the MFI ratio of the resins was between 0.1 and 10, and the polyolefin resin formed a continuous phase.

In Examples 3, 4 and 18 with greater amounts of the polypropylene resin, the heat resistance was very high even with a lower mold temperature, and the impact resistance was improved over Comparative Examples 2 and 3 consisting of the resins. Further, the durability was very excellent.

In Examples 19 to 25, the heat resistance and the impact resistance were increased and the appearance was improved by the addition of the epoxy-containing additive. Even with the different types and different amounts of the epoxy-containing additives, the physical properties were excellent.

In Examples 26 to 28, the heat resistance and the impact strength were increased and the appearance of the molded products was improved by the addition of the inorganic filler.

In Examples 29 to 35, the heat resistance and the impact resistance were increased and the appearance was improved by using the epoxy-containing additive and the inorganic filler in combination.

In Examples 36 to 38, the heat resistance was drastically improved by the addition of the organically treated swellable layered silicate.

In Examples 39 to 41, the heat resistance and the impact strength were increased and the durability was drastically improved by the terminal blocking of the aliphatic polyester resin.

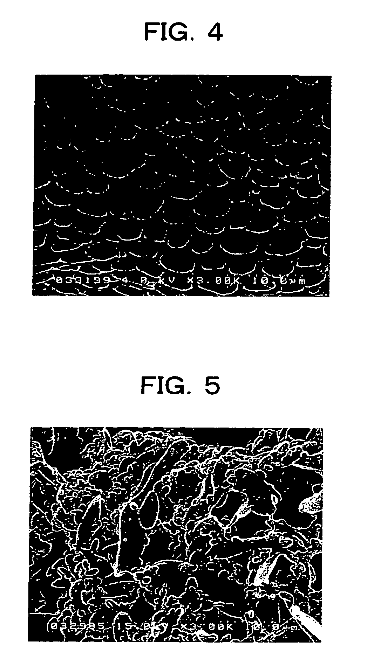

In Comparative Example 1, the amount of the polyolefin resin was too small, so that the heat resistance, the impact resistance and the durability were insufficient. Further, the polyolefin resin did not form a continuous phase, but was lumpy (see Fig. 5) .

In Comparative Example 2, the heat resistance and the durability were excellent but the impact strength was low, because the polyolefin resin was used alone. Further, there is a questionable point in that no biodegradable resin is used.

In Comparative Example 3, the heat resistance, the impact resistance and the durability were inferior, because the polylactic acid was used alone.

## Claims

1. A resin composition comprising:
10 to 99 mass % of a biodegradable aliphatic polyester resin (X); and
90 to 1 mass % of a polyolefin resin (Y),
**characterized in that** :
the biodegradable aliphatic polyester resin (X) has a melt flow index (MI_{E}) as measured at 190°C with a load of 21.2N,
the polyolefin resin (Y) has a melt flow index (MI_{PO}) as measured at 190°C with a load of 21.2N, and
a ratio (MI_{E}/MI_{PO}) of the melt flow index (MI_{E}) to the melt flow index (MI_{PO}) is in a range of 0.1 to 10.

2. The resin composition as set forth in claim 1, having a total light transmittance of not higher than 60 % as measured with respect to a 3-mm thick test piece in conformity with JIS K7105.

3. The resin composition as set forth in claim 1 or 2, wherein the polyolefin resin (Y) forms a continuous phase.

4. The resin composition as set forth in any of claims 1 to 3, wherein the biodegradable aliphatic polyester resin (X) has a blocked terminal.

5. The resin composition as set forth in any of claims 1 to 4, further comprising 0.1 to 30 parts by mass of an epoxy-containing additive based on a total of 100 parts by mass of the biodegradable aliphatic polyester resin (X) and the polyolefin resin (Y).

6. A resin composition as set forth in any of claims 1 to 5, further comprising 1 to 30 parts by mass of an inorganic filler based on a total of 100 parts by mass of the biodegradable aliphatic polyester resin (X) and the polyolefin resin (Y).

7. A resin composition as set forth in any of claims 1 to 6, further comprising 0.05 to 30 parts by mass of a swellable layered silicate based on a total of 100 parts by mass of the biodegradable aliphatic polyester resin (X) and the polyolefin resin (Y).

8. A product molded from a resin composition as recited in any of claims 1 to 7.

9. A method for preparing the resin composition as claimed in any of claims 1 to 7, the method comprising the step of melt-mixing a biodegradable aliphatic polyester resin (X) having a melt flow index (MI_{E}) as measured at 190°C with a load of 21.2N and a polyolefin resin (Y) having a melt flow index (MI_{PO}) as measured at 190°C with a load of 21.2N, wherein a ratio (MI_{E}/MI_{PO}) of the melt flow index (MI_{E}) to the melt flow index (MI_{PO}) is in a range of 0.1 to 10.

## Patentansprüche

1. Harzzusammensetzung mit:
10 bis 99 Masse-% biologisch abbaubares aliphatisches Polyesterharz (X) und
90 bis 1 Masse% Polyolefinharz (Y),
**dadurch gekennzeichnet, dass**
das biologisch abbaubare aliphatische Polyesterharz (X) einen Schmelzindex (MI_{E}) hat, der bei 190 °C mit einer Belastung von 21,2 N gemessen wird,
das Polyolefinharz (Y) einen Schmelzindex (MI_{PO}) hat, der bei 190 °C mit einer Belastung von 21,2 N gemessen wird, und
ein Verhältnis (MI_{E}/MI_{PO}) des Schmelzindex (MI_{E}) zu dem Schmelzindex (MI_{PO}) in einem Bereich von 0,1 bis 10 liegt.

2. Harzzusammensetzung nach Anspruch 1, die eine Gesamtlichtdurchlässigkeit von nicht mehr als 60 % hat, die für einen Prüfkörper mit einer Dicke von 3 mm nach JIS K7105 gemessen wird.

3. Harzzusammensetzung nach Anspruch 1 oder 2, **dadurch gekennzeichnet, dass** das Polyolefinharz (Y) eine zusammenhängende Phase bildet.

4. Harzzusammensetzung nach einem der Ansprüche 1 bis 3, **dadurch gekennzeichnet, dass** das biologisch abbaubare aliphatische Polyesterharz (X) eine inaktive Endgruppe hat.

5. Harzzusammensetzung nach einem der Ansprüche 1 bis 4, die weiterhin 0,1 bis 30 Masseteile epoxidhaltiger Zusatz, bezogen auf insgesamt 100 Masseteile biologisch abbaubares aliphatisches Polyesterharz (X) und Polyolefinharz (Y), aufweist.

6. Harzzusammensetzung nach einem der Ansprüche 1 bis 5, die weiterhin 1 bis 30 Masseteile anorganischer Füllstoff, bezogen auf insgesamt 100 Masseteile biologisch abbaubares aliphatisches Polyesterharz (X) und Polyolefinharz (Y), aufweist.

7. Harzzusammensetzung nach einem der Ansprüche 1 bis 6, die weiterhin 0,05 bis 30 Masseteile quellfähiges Schichtsilicat, bezogen auf insgesamt 100 Masseteile biologisch abbaubares aliphatisches Polyesterharz (X) und Polyolefinharz (Y), aufweist.

8. Artikel, der aus einer Harzzusammensetzung nach einem der Ansprüche 1 bis 7 geformt ist.

9. Verfahren zum Herstellen einer Harzzusammensetzung nach einem der Ansprüche 1 bis 7, mit dem Schritt des Schmelzmischens eines biologisch abbaubaren aliphatischen Polyesterharzes (X), das einen Schmelzindex (MI_{E}) hat, der bei 190 °C mit einer Belastung von 21,2 N gemessen wird, und eines Polyolefinharzes (Y), das einen Schmelzindex (MI_{PO}) hat, der bei 190 °C mit einer Belastung von 21,2 N gemessen wird, wobei ein Verhältnis (MI_{E}/MI_{PO}) des Schmelzindex (MI_{E}) zu dem Schmelzindex (MI_{PO}) in einem Bereich von 0,1 bis 10 liegt.

## Revendications

1. Composition de résine comprenant :
10 à 99% en masse d'une résine de polyester aliphatique biodégradable (X) ; et
90 à 1% en masse d'une résine de polyoléfine (Y),
**caractérisée en ce que** :
la résine de polyester aliphatique biodégradable (X) présente un indice de fluage (MI_{E}) tel que mesuré à 190°C avec une charge de 21,2 N,
la résine de polyoléfine (Y) présente un indice de fluage (MI_{PO}) tel que mesuré à 190°C avec une charge de 21,2 N, et
un rapport (MI_{E/}MI_{PO}) de l'indice de fluage (MI_{E}) sur l'indice de fluage (MI_{PO}) est dans une plage de 0,1 à 10.

2. Composition de résine selon la revendication 1, ayant une transmittance totale de la lumière non supérieure à 60% telle que mesurée par rapport à une éprouvette d'une épaisseur de 3 mm conformément à JIS K7105.

3. Composition de résine selon la revendication 1 ou 2, dans laquelle la résine de polyoléfine (Y) forme une phase continue.

4. Composition de résine selon l'une quelconque des revendications 1 à 3, dans laquelle la résine de polyester aliphatique biodégradable (X) comporte une terminaison bloquée.

5. Composition de résine selon l'une quelconque des revendications 1 à 4, comprenant en outre 0,1 à 30 parties en masse d'un additif contenant un époxy sur la base d'un total de 100 parties en masse de la résine de polyester aliphatique biodégradable (X) et de la résine de polyoléfine (Y).

6. Composition de résine selon l'une quelconque des revendications 1 à 5, comprenant en outre 1 à 30 parties en masse d'une charge inorganique sur la base d'un total de 100 parties en masse de la résine de polyester aliphatique biodégradable (X) et de la résine de polyoléfine (Y).

7. Composition de résine selon l'une quelconque des revendications 1 à 6, comprenant en outre 0,05 à 30 parties en masse d'un silicate stratifié capable de gonfler sur la base d'un total de 100 parties en masse de la résine de polyester aliphatique biodégradable (X) et de la résine de polyoléfine (Y).

8. Produit moulé à partir d'une composition de résine selon l'une quelconque des revendications 1 à 7.

9. Procédé de préparation de la composition de résine selon l'une quelconque des revendications 1 à 7, le procédé comprenant l'étape de mélange à l'état fondu d'une résine de polyester aliphatique biodégradable (X) présentant un indice de fluage (MI_{E}) tel que mesuré à 190°C avec une charge de 21,2 N et d'une résine de polyoléfine (Y) présentant un indice de fluage (MI_{PO}) tel que mesuré à 190°C avec une charge de 21,2 N, dans lequel un rapport (MI_{E/}MI_{PO}) de l'indice de fluage (MI_{E}) sur l'indice de fluage (MI_{PO}) est dans une plage de 0,1 à 10.
